(19) Europäisches Patentamt
European Patent Office
Office européen des brevets

(11) **EP 3 479 136 B1**

(12) **FASCICULE DE BREVET EUROPEEN**

(45) Date de publication et mention de la délivrance du brevet:
**29.04.2020 Bulletin 2020/18**

(21) Numéro de dépôt: **17732478.7**

(22) Date de dépôt: **29.06.2017**

(51) Int Cl.:
**G01S 7/02** *(2006.01)*

(86) Numéro de dépôt international:
**PCT/EP2017/066109**

(87) Numéro de publication internationale:
**WO 2018/002208 (04.01.2018 Gazette 2018/01)**

(54) **PROCÉDÉ D'ESTIMATION D'UNE DATE D'ARRIVÉE MOYENNE D'UN TRAIN D'IMPULSIONS**

VERFAHREN ZUR SCHÄTZUNG EINER DURCHSCHNITTLICHEN ANKUNFTSZEIT FÜR EINE IMPULSFOLGE

METHOD FOR ESTIMATING AN AVERAGE ARRIVAL DATE FOR A TRAIN OF PULSES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.06.2016 FR 1601033**

(43) Date de publication de la demande:
**08.05.2019 Bulletin 2019/19**

(73) Titulaire: **Thales**
**92400 Courbevoie (FR)**

(72) Inventeurs:
• **SEUTE, Hugo**
**78990 ELANCOURT (FR)**
• **ENDERLI, Cyrille**
**78990 ELANCOURT (FR)**
• **GRANDIN, Jean-François**
**78990 ELANCOURT (FR)**

(74) Mandataire: **Lavoix**
**2, place d'Estienne d'Orves**
**75441 Paris Cedex 09 (FR)**

(56) Documents cités:
**EP-A1- 2 309 289        US-A- 5 583 505**
**US-A1- 2005 033 789**

**Description**

La présente invention concerne un procédé d'estimation d'une date d'arrivée moyenne sur un détecteur de radars d'un train d'impulsions émis par un émetteur. La présente invention se rapporte, également, à un dispositif associé d'estimation d'une date d'arrivée moyenne sur un détecteur de radars d'un train d'impulsions.

Un détecteur de radars est propre à recevoir des impulsions en provenance d'émetteurs radar distincts. Un tel détecteur de radars comprend typiquement un récepteur d'impulsions radar et une unité de traitement des impulsions reçues. Le récepteur a pour fonction de recevoir, de détecter et de caractériser les impulsions en provenance d'émetteurs radars. Les impulsions étant reçues au rythme de leur émission, le récepteur est propre à produire des caractérisations successives correspondant aux différentes impulsions radar dans l'ordre de leur réception. L'unité de traitement a pour fonction de trier selon un critère de cohérence les impulsions reçues pour construire des ensembles d'impulsions représentatifs des émetteurs radar d'origine.

Cependant, le tri effectué par une telle unité de traitement est limité lorsque les caractéristiques des différents émetteurs radar sont proches les unes des autres.

En outre, un tel tri est susceptible de créer des trains d'impulsions caractérisés ne correspondant pas aux trains d'impulsions réellement émis par chacun des émetteurs radars. Par exemple, des impulsions d'un train d'impulsions sont susceptibles d'être manquantes par rapport au train d'impulsions réellement émis ou encore de provenir d'un autre émetteur radar.

De plus, des impulsions sont aussi susceptibles de manquer du fait de la sensibilité limitée du détecteur de radars ou encore d'interruption dans la réception des signaux radars. Les limites de sensibilité du détecteur de radars sont, par exemple, dues à un signal de puissance trop faible, à la non-illumination du détecteur de radars, voire également à des phénomènes de propagation hertzienne de la plate-forme porteuse du détecteur de radars.

En outre, afin de localiser les émetteurs radar, notamment à partir de méthodes basées sur la différence de dates d'arrivée (en anglais *Time Différence Of Arrival*) plusieurs détecteurs de radars sont mis en réseau. Les dates d'arrivée des trains d'impulsions reçus par de tels détecteurs de radars sont, ensuite, transmises à un dispositif central dont la fonction est de localiser les émetteurs radar à partir des dates d'arrivée transmises.

Néanmoins, de telles transmissions exigent un débit relativement élevé au regard des liaisons de données normalisées existantes.

Le document US 5 583 505 A décrit un exemple d'un système de détection et de classification d'impulsions radar. Le document US 2005/033789 A décrit un dispositif de corrélation multiple configuré pour estimer une période de répétition des impulsions associée à un train d'impulsions reçu. Le document EP 2 309 289 A décrit un procédé de séparation de train d'impulsions radar imbriqués.

Il existe donc un besoin pour un procédé permettant d'estimer précisément les dates d'arrivée de trains d'impulsions reçus par un détecteur de radars tout en permettant une transmission des dates d'arrivées estimées avec un débit adapté aux liaisons de données normalisées existantes.

A cet effet, l'invention a pour objet un procédé d'estimation d'une date d'arrivée moyenne sur un détecteur de radars, d'un train d'impulsions émis par un émetteur, le détecteur de radars fournissant une date d'arrivée pour chaque impulsion du train d'impulsions et une période de répétition des impulsions du train d'impulsions, le procédé comprenant les étapes de :

- détermination, pour chaque impulsion du train d'impulsions, du reste de la division euclidienne de la date d'arrivée de l'impulsion par la période de répétition des impulsions, et
- estimation d'une date d'arrivée moyenne du train d'impulsions à partir d'une moyenne des restes déterminés pour chaque impulsion.

L'invention s'intègre, de préférence, à un détecteur de radars, plus précisément à la partie appelée précédemment unité de traitement.

Suivant des modes de mise en oeuvre particuliers, le procédé d'estimation comprend une ou plusieurs des caractéristiques suivantes, prises isolément ou suivant toutes les combinaisons techniquement possibles :

- l'étape d'estimation comprend l'association d'un numéro à chaque impulsion du train d'impulsions, le numéro de chaque impulsion étant obtenu par division de la date d'arrivée de l'impulsion par la période de répétition des impulsions, l'étape d'estimation comprenant, en outre, la détermination d'une droite de régression à partir de couples formés par les numéros des impulsions et les restes déterminés pour les impulsions, la date d'arrivée moyenne estimée étant fonction de l'ordonnée à l'origine de la droite de régression.
- pour chaque impulsion du train d'impulsions, le numéro et le reste sont calculés à partir de la date d'arrivée de l'impulsion diminuée d'un décalage, le décalage étant choisi de sorte que la différence entre la date d'arrivée de la première impulsion du train et le décalage soit comprise au sens large entre zéro et la période de répétition des impulsions.

- la droite de régression est obtenue par la méthode des moindres carrés ordinaires.
- la période de répétition des impulsions est affectée d'une erreur d'estimation, ladite erreur d'estimation étant égale à l'opposé de la pente de la droite de régression.
- les dates d'arrivée des impulsions sont affectées d'une erreur de mesure, l'étape d'estimation comprenant le calcul, pour chaque impulsion du train, d'un résidu égal à la valeur absolue de la différence entre le reste et la valeur donnée par la droite de régression pour le numéro correspondant au reste considéré, divisée par l'écart-type de l'erreur de mesure sur les dates d'arrivée, l'étape d'estimation comprenant, en outre, l'élimination des impulsions dont le résidu est supérieur ou égal à un seuil prédéterminé et la répétition de la sous-étape de détermination d'une droite de régression à partir des impulsions restantes.
- le seuil prédéterminé est égal à trois.
- le procédé comprend la répétition des sous-étapes de détermination de la droite de régression, de calcul d'un résidu et d'élimination d'impulsions jusqu'à ce que les résidus calculés soient strictement inférieurs au seuil prédéterminé.
- lorsque des résidus sont supérieurs ou égaux au seuil prédéterminé et correspondent à au moins trois numéros d'impulsions consécutifs, la période de répétition des impulsions est considérée avoir des changements de valeurs.

L'invention concerne aussi un dispositif d'estimation d'une date d'arrivée moyenne sur un détecteur de radars d'un train d'impulsions émis par un émetteur, le dispositif comprenant un processeur configuré pour :

- recevoir une date d'arrivée de chaque impulsion du train d'impulsion et une période de répétition des impulsions dudit train d'impulsions, en provenance du détecteur de radars,
- déterminer, pour chaque impulsion du train d'impulsions, le reste de la division euclidienne de la date d'arrivée de l'impulsion par la période de répétition des impulsions, et
- estimer une date d'arrivée moyenne du train d'impulsions à partir d'une moyenne des restes déterminés pour chaque impulsion.

D'autres caractéristiques et avantages de l'invention apparaîtront à la lecture de la description qui suit de modes de réalisation de l'invention, donnée à titre d'exemple uniquement et en référence aux dessins qui sont :

- figure 1, une vue schématique d'un exemple d'un émetteur, d'un détecteur de radars et d'un dispositif d'estimation d'une date d'arrivée moyenne d'un train d'impulsions reçu par le détecteur de radars,
- figure 2, un exemple d'un organigramme des étapes d'un procédé d'estimation d'une date d'arrivée moyenne d'un train d'impulsions reçu par un détecteur de radars,
- figure 3, un premier exemple d'une représentation des restes déterminés pour chaque impulsion en fonction des numéros de chaque impulsion, la représentation comprenant des zones où des impulsions sont manquantes,
- figure 4, un deuxième exemple d'une représentation des restes déterminés pour chaque impulsion en fonction des numéros de chaque impulsion, la représentation comportant une valeur aberrante, et
- figure 5, un troisième exemple d'une représentation des restes déterminés pour chaque impulsion en fonction des numéros de chaque impulsion, la période de répétition des impulsions variant au cours du temps.

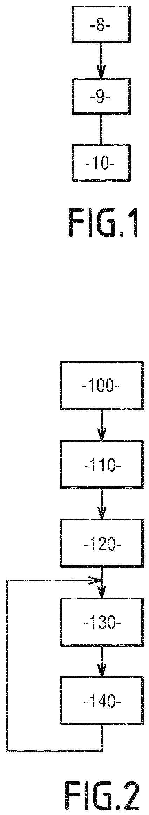

Un émetteur 8, un détecteur de radars 9 et un dispositif 10 d'estimation d'une date d'arrivée moyenne d'un train d'impulsions reçu par le détecteur de radars 9 sont illustrés par la figure 1.

L'émetteur 8 est disposé sur une plate-forme porteuse, par exemple, un aéronef, un drone, un navire, un véhicule terrestre ou une station terrestre.

L'émetteur 8 est configuré pour émettre des trains d'impulsions.

L'émetteur 8 est, par exemple, un émetteur de signaux radar.

Le détecteur de radars 9 est disposé sur une plate-forme porteuse distincte de la plate-forme porteuse de l'émetteur 8. La plate-forme porteuse du détecteur de radars 9 est, par exemple, un aéronef, un drone, un navire, un véhicule terrestre ou une station terrestre.

Le détecteur de radars 9 est configuré pour recevoir des trains d'impulsions, notamment en provenance de l'émetteur 8.

Le détecteur de radars 9 comprend un récepteur d'impulsions arrivant sur le détecteur de radars 9 et une unité de traitement desdites impulsions.

Le récepteur du détecteur de radars 9 a pour fonction de recevoir, de détecter et de caractériser les impulsions en provenance d'émetteurs radar. En particulier, le récepteur du détecteur de radars 9 a pour fonction de mesurer les dates d'arrivée des impulsions des trains d'impulsions émis par l'émetteur 8 et arrivant sur le détecteur de radars 9.

L'unité de traitement du détecteur de radars 9 a pour fonction de trier selon un critère de cohérence les impulsions reçues pour construire des ensembles d'impulsions représentatifs des émetteurs radar d'origine.

Le détecteur de radars 9 est, par exemple, un détecteur de signaux radar.

Le détecteur de radars 9 est en liaison avec le dispositif 10 qui est, par exemple, disposé sur la même plate-forme que le détecteur de radars 9.

Le dispositif 10 est un ensemble de traitement connexe à l'unité de traitement du détecteur de radars 9. À ce titre, le dispositif 10 est, par exemple, un processeur dédié.

En variante, le dispositif 10 est intégré dans le système de traitement du détecteur de radars 9.

Le processeur du dispositif 10 comprend une unité de traitement de données, des mémoires et un lecteur de support d'informations.

Le processeur du dispositif 10 est propre à interagir avec un produit programme d'ordinateur comprenant un support lisible d'informations lisible par le processeur, usuellement par l'unité de traitement de données du processeur. Sur le support lisible d'information est mémorisé un programme d'ordinateur comprenant des instructions de programme.

Le programme d'ordinateur est chargeable sur l'unité de traitement de données du processeur et est adapté pour entraîner la mise en oeuvre d'un procédé d'estimation d'une date d'arrivée moyenne d'un train d'impulsions reçu par le détecteur de radars 9.

Un exemple de mise en oeuvre d'un procédé d'estimation utilisant le dispositif 10 est maintenant décrit en référence à la figure 2.

Dans toute la suite de la description, l'indice $n$ désigne la n-ième impulsion d'un train d'impulsions.

Initialement, le procédé d'estimation comprend une étape 100 de fourniture, par le détecteur de radars 9, au dispositif 10, des dates d'arrivée $t_n$ sur le détecteur de radars 9 des impulsions du train d'impulsions émis par l'émetteur 8. De telles dates d'arrivée $t_n$ ont été, par exemple, mesurées par le récepteur du détecteur de radars 9.

L'étape de fourniture 100 comprend, également, la fourniture par le détecteur de radars 9, au dispositif 10, d'une estimation de la période de répétition des impulsions $T$ émises par l'émetteur 8. La période de répétition des impulsions $T$ est, par exemple, estimée par l'unité de traitement du détecteur de radars 9. Une telle période de répétition des impulsions $T$ correspond à la durée séparant deux impulsions consécutives émises par l'émetteur 8.

Dans une variante, la période de répétition des impulsions $T$ est, par exemple, issue d'une base de données suite à l'identification de l'émetteur 8.

La période de répétition des impulsions fournie $T$ est susceptible d'être affectée d'une erreur d'estimation. L'erreur d'estimation sur la période de répétition des impulsions est, par exemple, due à l'effet Doppler, notamment lorsque la variation de la distance relative entre l'émetteur et le détecteur de radars ne devient plus négligeable durant la durée d'écoute. Une telle situation se retrouve, par exemple, dans le cas de détecteurs de radars embarqués évoluant à grande vitesse. L'erreur d'estimation est susceptible d'être due à une valeur de période de répétition des impulsions d'une base de données qui ne correspond pas exactement à celle du radar écouté.

L'erreur d'estimation est supposée faible devant la valeur de la période de répétition des impulsions. Par exemple, si la période de répétition des impulsions est de l'ordre de la milliseconde, l'erreur d'estimation est supposée être de l'ordre de la microseconde.

Le procédé d'estimation comprend une étape 110 de détermination d'un numéro $x_n$ pour chaque impulsion du train d'impulsions reçu par le détecteur de radars 9, dont la date d'arrivée est $t_n$. Avantageusement, le numéro $x_n$ de chaque impulsion est égal à la partie entière de la division de la différence entre la date d'arrivée $t_n$ de l'impulsion et un décalage, par la période de répétition des impulsions $T$ fournie ; ce qui est résumé par l'expression suivante :

$$x_n = \left\lfloor \frac{t_n - \Delta}{T} \right\rfloor \qquad (1)$$

où :

- $T$ est la période de répétition des impulsions,
- $\Delta$ est un décalage choisi de façon que la date d'arrivée de la première impulsion du train et le décalage soit compris au sens large entre zéro et la période de répétition $T$, et
- $\lfloor X \rfloor$ est la partie entière de $X$.

Le procédé d'estimation comprend une étape 120 de détermination, pour chaque impulsion du train d'impulsions reçu, du reste $y_n$ de la division euclidienne de la date d'arrivée $t_n$, décalée de la valeur de $\Delta$ précédemment choisie, par la période de répétition des impulsions $T$. Un tel reste $y_n$ s'exprime de la façon suivante :

$$y_n = (t_n - \Delta) - x_n \cdot T \qquad (2)$$

Les valeurs de date d'arrivée $t_n$ sont issues de mesures effectuées par le détecteur de radars 9 et, à ce titre, les valeurs de date d'arrivée $t_n$ sont, en fait, égales à une valeur vraie $t_{v,n}$ additionnée à une erreur de mesure $w_n$. De la même façon, la période de répétition des impulsions $T$ est déterminée à partir des dates d'arrivée $t_n$ estimées par le détecteur de radars 9, ce qui signifie que la période de répétition des impulsions $T$ vaut une valeur vraie $T_v$ additionnée à une erreur d'estimation $\varepsilon_T$.

Ainsi, le reste $y_n$ correspond à la date d'arrivée à laquelle l'impulsion correspondante aurait dû arriver sur le détecteur de radars 9, à une erreur de mesure $w_n$ près et à une erreur d'estimation $\varepsilon_T$ sur la période de répétition des impulsions près.

Le reste $y_n$ s'exprime également de la façon suivante :

$$y_n = \left(t_{v,n} + w_n - \Delta\right) - x_n \cdot (T_v + \varepsilon_T)$$
$$y_n = \left(t_{v,n} - x_n \cdot T_v\right) - \Delta + w_n - x_n \cdot \varepsilon_T \tag{3}$$

On remarquera que $(t_{v,n} - x_n \cdot T_v)$ correspond à une date unique ne dépendant pas de $n$ puisqu'on retranche de la date d'arrivée vraie courante le nombre courant de périodes de répétition des impulsions vraie. Cette date unique est prise comme date d'arrivée initiale du train d'impulsion et est notée $t_0$. Ainsi, le reste $y_n$ s'exprime, également, de la façon suivante :

$$y_n = t_0 - \Delta + w_n - x_n \cdot \varepsilon_T \tag{4}$$

Cela signifie que les valeurs des restes $y_n$ sont distribuées autour d'une droite de régression qui a pour équation :

$$y = y(x_n) = a \cdot x_n + b \tag{5}$$

avec :

$$a = -\varepsilon_T \tag{6}$$

$$b = t_0 - \Delta \tag{7}$$

Le procédé d'estimation comprend une étape 130 d'ajustement d'une courbe aux restes $y_n$ de chaque impulsion en fonction des numéros $x_n$ de chaque impulsion pour obtenir une courbe ajustée, aussi appelée « droite de régression » d'équation $y = ax + b$.

Une telle courbe ajustée est obtenue par régression linéaire à partir des deux séries de valeurs précédemment calculées : les restes $y_n$ et les numéros $x_n$. La droite de régression est, par exemple, obtenue par la méthode des moindres carrés.

Une telle droite de régression d'équation $y = ax + b$ est alors définie par les termes suivants :

$$a = \frac{\bar{x} \cdot \bar{y} - \overline{x \cdot y}}{\overline{x^2} - \bar{x}^2} \tag{8}$$

$$b = \bar{y} - a\bar{x} \tag{9}$$

où :

- $\bar{y}$ est la moyenne arithmétique des restes $y_n$,
- $\bar{x}$ est la moyenne arithmétique des numéros $x_n$,
- $\overline{x^2}$ est la moyenne arithmétique des carrés des numéros $x_n$, et
- $\overline{(x.y)}$ est la moyenne arithmétique des produits $x_n \cdot y_n$ des numéros $x_n$ par les restes $y_n$.

La date d'arrivée moyenne estimée est égale à la somme de l'ordonnée à l'origine de la courbe ajustée et du décalage précédemment calculé. Un tel ajustement est assimilable à une moyenne des restes $y_n$ déterminés pour chaque impulsion.

Lorsque l'estimation de la période de répétition des impulsions $T$ fournie lors de l'étape 110 est affectée d'une erreur d'estimation, l'erreur d'estimation est égale à l'opposé du coefficient directeur ou pente de la droite de régression.

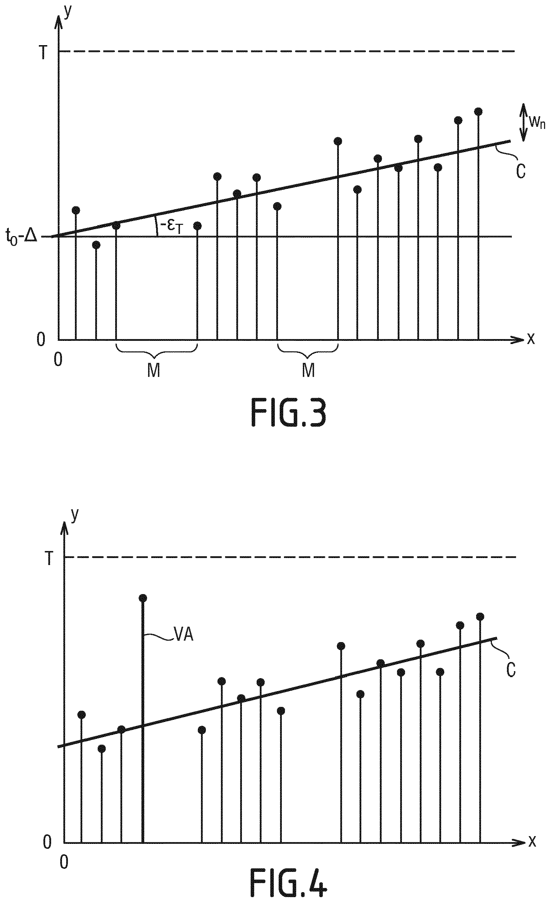

Un exemple d'ajustement est illustré sur la figure 3. Sur cette figure, l'axe des abscisses correspond aux numéros $x_n$ des impulsions et l'axe des ordonnées correspond aux restes $y_n$ des impulsions. Les valeurs des restes $y_n$ de chaque impulsion en fonction des numéros $x_n$ de chaque impulsion sont représentées par des points en gras. Les numéros d'impulsions $x_n$ au niveau des accolades M ne comprennent pas de restes $y_n$ associés, dû à un manque d'impulsions.

La droite C est la courbe obtenue à l'issue de l'ajustement. La valeur ($t_0$ - $\Delta$) est l'ordonnée à l'origine de la droite C, qui permet donc une estimation de la date d'arrivée moyenne. La valeur $-\varepsilon_T$ est le coefficient directeur de la droite C, qui est donc l'opposé de l'erreur d'estimation de la période de répétition des impulsions $T$ fournie. La valeur .$w_n$ désigne l'erreur de mesure $w_n$ sur les dates d'arrivées des impulsions.

Le procédé d'estimation comprend une étape 140 de calcul, pour chaque impulsion, d'un résidu d'ajustement afin d'éliminer des valeurs aberrantes des restes $y_n$. Le résidu d'ajustement de chaque impulsion est obtenu en fonction du reste $y_n$ déterminé pour l'impulsion et du reste correspondant obtenu par l'ajustement.

Plus précisément, pour chaque valeur de numéro $x_n$, il est calculé un résidu d'ajustement égal à la valeur absolue du rapport de l'écart, entre le reste $y_n$ et la valeur $y(x_n)$ de la droite de régression pour le numéro $x_n$ considéré par l'écart-type $\sigma_t$ de l'erreur de mesure $w_n$ sur les dates d'arrivée. Le résidu, noté $\alpha_n$, est donné par la formule suivante :

$$\alpha_n = \left| \frac{y_n - y(x_n)}{\sigma_t} \right| \qquad (10)$$

Si le résidu $\alpha_n$ est supérieur ou égal à un seuil prédéterminé $A$, la valeur de $y_n$ est considérée comme aberrante et le couple $(x_n, y_n)$ correspondant, formé d'un numéro $x_n$ et du reste $y_n$ associé est éliminé. Le seuil prédéterminé $A$ est, par exemple, égal à trois. Un exemple de valeur aberrante est illustré sur la figure 4 par la référence « VA ».

Sinon, il n'y a pas de valeur aberrante, la date d'arrivée moyenne du train d'impulsions vaut (voir formule (7)) :

$$t_0 = b + \Delta \qquad (11)$$

et l'erreur commise sur la période de répétition des impulsions fournie vaut (voir formule (6)) :

$$\varepsilon_T = -a \qquad (12)$$

Si un nombre prédéterminé $B$ de valeurs consécutives de $y_n$ sont aberrantes, cela signifie qu'il y a un changement de période de répétition des impulsions et, conséquemment, que la mesure de période de répétition des impulsions T fournie n'est pas représentative de la réalité. Le nombre prédéterminé $B$ est, par exemple, égal à trois.

Le procédé d'estimation comprend la répétition de : l'étape de détermination 130 sur la base des numéros $x_n$ et des restes $y_n$ restants après l'étape précédente 140 d'analyse et d'élimination ; ainsi que de l'étape 140 jusqu'à élimination complète des valeurs aberrantes, c'est-à-dire jusqu'à ce que les résidus calculés soient strictement inférieurs au seuil prédéterminé $A$.

Dans la mesure où il reste un nombre d'impulsions supérieur ou égal à une valeur donnée $D$, les valeurs de date d'arrivée moyenne du train d'impulsions et de l'erreur commise sur la période de répétition des impulsions sont respectivement basées sur les dernières valeurs d'ordonnée à l'origine $b$ et de coefficient directeur $a$ de la droite de régression, de telles valeurs étant calculées selon les formules (11) et (12). La valeur donnée $D$ est, par exemple, égal à dix.

Pour des raisons de temps de calcul limité en application, une variante simplifiée ne répète l'étape 130 qu'une seule fois en fournissant des secondes valeurs d'ordonnée à l'origine $b$ et de coefficient directeur $a$ de la droite de régression, pour déterminer les valeurs de date d'arrivée moyenne du train d'impulsions et de l'erreur commise sur la période de répétition des impulsions toujours selon les formules (11) et (12).

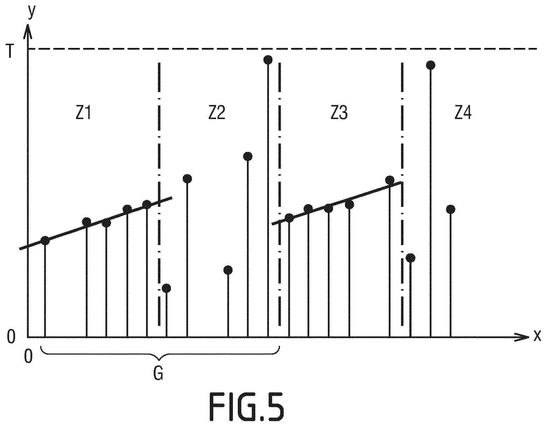

La figure 5 illustre un exemple de variation de la période de répétition des impulsions $T$ d'un émetteur. Cette figure montre des zones Z1 et Z3 correspondant à des impulsions pour lesquelles l'erreur d'estimation sur la période de répétition des impulsions $T$ est faible et les zones Z2 et Z4 correspondent à des impulsions pour lesquelles l'erreur d'estimation sur la période de répétition des impulsions $T$ est élevée. De ce fait, les résidus d'ajustement relatifs aux impulsions des zones Z2 et Z4 ont des valeurs élevées, de manière similaire à des valeurs aberrantes. La représentation

des restes $y_n$ en fonction des numéros $x_n$ permet de mettre en évidence de tels changements significatifs de période de répétition des impulsions $T$ et d'en déduire des motifs de commutation de période de répétition des impulsions $T$. L'accolade G désigne un exemple de motif de commutation. La reconnaissance des motifs de commutation permet de contribuer à l'identification du mode et du type d'émetteur observé.

Ainsi, le procédé est particulièrement robuste aussi bien aux manques d'impulsions reçues, qu'à des imprécisions sur la période de répétition des impulsions fournie ou qu'aux valeurs aberrantes susceptibles d'être causées, par exemple, par des défauts des traitements en amont, des réflexions multiples, des défauts matériels, ou encore par des changements de la période de répétition T des impulsions.

De ce fait, le procédé permet d'estimer précisément une date d'arrivée moyenne d'un train d'impulsions reçu par le détecteur de radars 9. La notion de date d'arrivée moyenne permet de fournir une seule valeur consolidée pour un train d'impulsions, au lieu d'un ensemble de valeurs. De ce fait, le débit de données échangées entre le détecteur de radars 9 et un dispositif central dont la fonction est d'estimer la localisation des émetteurs de signaux radar à partir de différences de dates d'arrivée, est réduit.

Ainsi, les dates d'arrivée moyennes estimées pour les trains d'impulsions reçus par le détecteur de radars 9 sont particulièrement adaptées à être transmises et utilisées à des fins de localisation de l'émetteur 8 par une méthode de différence de dates d'arrivée.

L'homme du métier comprend que l'invention couvre toutes les combinaisons possibles des modes de mises en oeuvre décrits précédemment.

Par exemple, dans une variante, aucun décalage $\Delta$ n'est utilisée pour calculer les numéros ($x_n$) et les restes ($y_n$), ce qui équivaut à prendre le décalage $\Delta$ comme toujours nul dans les formules et modes de réalisations précédents. L'introduction d'un décalage $\Delta$ non nul dans les modes de réalisation précédents permet de travailler sur des dates d'arrivée décalées correspondant à des nombres plus petits, donc plus faciles à utiliser.

En outre, l'homme du métier comprendra qu'il est considéré que l'écart-type d'un ensemble de valeurs est la valeur moyenne quadratique des valeurs centrées, les valeurs centrées étant les valeurs diminuées chacune de la valeur moyenne desdites valeurs. En d'autres termes, l'écart-type de l'ensemble de valeurs est la racine carrée de la valeur moyenne arithmétique des carrés des valeurs diminuées de la valeur moyenne arithmétique desdites valeurs. En termes mathématiques, l'écart-type $\sigma$ d'un ensemble de valeurs $v_1, ..., v_N$ est donné par la formule (13) suivante :

$$\sigma = \sqrt{\frac{1}{N} \sum_{i=1}^{N} (v_i - \bar{v})^2} \qquad (13)$$

où :

- $\bar{v}$ est la moyenne arithmétique des valeurs $v_1, ..., v_N$,
- $\sqrt{X}$ est la racine carrée de X, et
- $\sum_{i=1}^{N} X_i$ est la somme de 1 à N des valeurs $X_1, ..., X_N$.

## Revendications

**1.** Procédé d'estimation d'une date d'arrivée moyenne sur un détecteur de radars (9), d'un train d'impulsions émis par un émetteur (8), le détecteur de radars (9) fournissant une date d'arrivée ($t_n$) pour chaque impulsion du train d'impulsions et une période de répétition ($T$) des impulsions du train d'impulsions, le procédé comprenant les étapes de :

- détermination, pour chaque impulsion du train d'impulsions, du reste ($y_n$) de la division euclidienne de la date d'arrivée ($t_n$) de l'impulsion par la période de répétition des impulsions ($T$), et
- estimation d'une date d'arrivée moyenne du train d'impulsions à partir d'une moyenne des restes ($y_n$) déterminés pour chaque impulsion.

**2.** Procédé selon la revendication 1, dans lequel l'étape d'estimation comprend l'association d'un numéro ($x_n$) à chaque impulsion du train d'impulsions, le numéro ($x_n$) de chaque impulsion étant obtenu par division de la date d'arrivée ($t_n$) de l'impulsion par la période de répétition des impulsions ($T$), l'étape d'estimation comprenant, en outre, la détermination d'une droite de régression ($y(x)$) à partir de couples (($x_n,y_n$)) formés par les numéros ($x_n$) des impulsions et les restes ($y_n$) déterminés pour les impulsions, la date d'arrivée moyenne estimée étant fonction de l'ordonnée à l'origine de la droite de régression ($y(x)$).

3. Procédé selon la revendication 2, dans lequel, pour chaque impulsion du train d'impulsions, le numéro ($x_n$) et le reste ($y_n$) sont calculés à partir de la date d'arrivée de l'impulsion ($t_n$) diminuée d'un décalage ($\Delta$), le décalage ($\Delta$) étant choisi de sorte que la différence entre la date d'arrivée de la première impulsion du train et le décalage soit comprise au sens large entre zéro et la période de répétition des impulsions ($T$).

4. Procédé selon les revendications 2 ou 3, dans lequel la droite de régression est obtenue par la méthode des moindres carrés ordinaires.

5. Procédé selon l'une quelconque des revendications 2 à 4, dans lequel la période de répétition des impulsions est affectée d'une erreur d'estimation, ladite erreur d'estimation étant égale à l'opposé de la pente de la droite de régression.

6. Procédé selon l'une quelconque des revendications 2 à 5, dans lequel les dates d'arrivée ($t_n$) des impulsions sont affectées d'une erreur de mesure ($\sigma_t$), l'étape d'estimation comprenant le calcul, pour chaque impulsion du train, d'un résidu égal à la valeur absolue de la différence entre le reste ($y_n$) et la valeur ($y(x_n)$) donnée par la droite de régression pour le numéro ($x_n$) correspondant au reste ($y_n$) considéré, divisée par l'écart-type de l'erreur de mesure ($\sigma_t$) sur les dates d'arrivée ($t_n$), l'étape d'estimation comprenant, en outre, l'élimination des impulsions dont le résidu est supérieur ou égal à un seuil prédéterminé (A) et la répétition de la sous-étape de détermination d'une droite de régression à partir des impulsions restantes.

7. Procédé selon la revendication 6, dans lequel le seuil prédéterminé (A) est égal à trois.

8. Procédé selon la revendication 6 ou 7, dans lequel le procédé comprend la répétition des sous-étapes de détermination de la droite de régression, de calcul d'un résidu et d'élimination d'impulsions jusqu'à ce que les résidus calculés soient strictement inférieurs au seuil prédéterminé (A).

9. Procédé selon l'une quelconque des revendications 6 à 8, dans lequel lorsque des résidus sont supérieurs ou égaux au seuil prédéterminé (A) et correspondent à au moins trois numéros d'impulsions ($x_n$) consécutifs, la période de répétition des impulsions (T) est considérée avoir des changements de valeurs.

10. Dispositif (10) d'estimation d'une date d'arrivée moyenne sur un détecteur de radars (9) d'un train d'impulsions émis par un émetteur (8), le dispositif comprenant un processeur configuré pour :

   - recevoir une date d'arrivée ($t_n$) de chaque impulsion du train d'impulsion et une période de répétition des impulsions ($T$) dudit train d'impulsions, en provenance du détecteur de radars (9),
   - déterminer, pour chaque impulsion du train d'impulsions, le reste ($y_n$) de la division euclidienne de la date d'arrivée ($t_n$) de l'impulsion par la période de répétition des impulsions ($T$), et
   - estimer une date d'arrivée moyenne du train d'impulsions à partir d'une moyenne des restes ($y_n$) déterminés pour chaque impulsion.

**Patentansprüche**

1. Verfahren zum Schätzen eines mittleren Ankunftsdatums einer Impulsfolge auf einem Radardetektor (9), die von einem Sender (8) gesendet wird, wobei der Radardetektor (9) ein Ankunftsdatum ($t_n$) für jeden Impuls der Impulsfolge und eine Wiederholungsperiode (T) der Impulse der Impulsfolge liefert, wobei das Verfahren die Schritte umfasst:

   - Bestimmen für jeden Impuls der Impulsfolge des Restes ($y_n$) der euklidischen Teilung des Ankunftsdatums ($t_n$) des Impulses durch die Wiederholungsperiode (T) der Impulse und
   - Schätzen eines mittleren Ankunftsdatums der Impulsfolge aus einem Mittelwert der für jeden Impuls bestimmten Reste ($y_n$).

2. Verfahren nach Anspruch 1, bei dem jeder Schätzschritt die Zuordnung einer Nummer ($x_n$) zu jedem Impuls der Impulsfolge umfasst, wobei die Nummer ($x_n$) jedes Impulses durch Teilung des Ankunftsdatums ($t_n$) des Impulses durch die Wiederholungsperiode (T) der Impulse erhalten wird und der Schätzschritt außerdem die Bestimmung einer Regressionsgeraden ($y(x)$) aus Paaren (($x_n$, $y_n$)), die aus den Nummern ($x_n$) der Impulse und den für die Impulse bestimmten Resten ($y_n$) gebildet werden, umfasst, wobei das geschätzte mittlere Ankunftsdatum eine Funktion der Koordinate im Ursprung der Regressionsgeraden ($y(x)$) ist.

3. Verfahren nach Anspruch 2, bei dem für jeden Impuls der Impulsfolge die Nummer ($x_n$) und der Rest ($y_n$) aus dem Ankunftsdatum des Impulses ($t_n$), verringert um ein Offset ($\Delta$) berechnet werden, wobei der Offset ($\Delta$) derart ausgewählt wird, dass die Differenz zwischen dem Ankunftsdatum des ersten Impulses der Folge und dem Offset im weiteren Sinne zwischen Null und der Wiederholungsperiode (T) der Impulse liegt.

4. Verfahren nach Anspruch 2 oder 3, bei dem die Regressiongerade durch das Verfahren der kleinsten Quadrate erhalten wird.

5. Verfahren nach einem beliebigen der Ansprüche 2 bis 4, bei der der Wiederholungsperiode der Impulse ein Schätzfehler zugeordnet wird, wobei dieser Schätzfehler gleich dem Entgegengesetzten der Steigung der Regressiongeraden ist.

6. Verfahren nach einem beliebigen der Ansprüche 2 bis 5, bei dem den Ankunftsdaten ($t_n$) der Impulse ein Messfehler ($\alpha_t$) zugeordnet wird, wobei der Schätzschritt für jede Impulsfolge die Berechnung eines Restes gleich einem absoluten Wert der Differenz zwischen dem Rest ($y_n$) und dem Wert ($y(x_n)$), der durch die Regressiongerade für die Nummer ($x_n$) entsprechend dem betrachteten Rest ($y_n$) gegeben ist, geteilt durch die Standardabweichung des Messfehler ($\alpha_t$) über die Ankunftsdaten ($t_n$) umfasst, wobei der Schätzschritt außerdem die Eliminierung der Impulse, deren Rest größer als eine oder gleich einer vorbestimmten Schwelle (A) ist, und die Wiederholung des Unterschritts des Bestimmens einer Regressionsgeraden aus den verbleibenden Impulsen umfasst.

7. Verfahren nach Anspruch 6, bei dem die vorbestimmte Schwelle (A) gleich drei ist.

8. Verfahren nach Anspruch 6 oder 7, bei dem das Verfahren die Wiederholung der Unterschritte des Bestimmens der Regressiongeraden, des Berechnens eines Restes und das Eliminieren von Impulsen bis die berechneten Reste streng kleiner sind als die vorbestimmte Schwelle (A) umfasst.

9. Verfahren nach einem beliebigen der Ansprüche 6 bis 8, bei dem, wenn die Reste größer sind als die vorbestimmte Schwelle (A) oder gleich dieser und mindestens drei aufeinanderfolgenden Impulsnummern ($x_n$) entsprechen, die Wiederholungsperiode (T) der Impulse angesehen wird, als ob sie Werteänderungen aufweist.

10. Vorrichtung (10) zum Schätzen eines mittleren Ankunftsdatums einer Impulsfolge auf einem Radardetektor (9), die von einem Sender (8) gesendet wird, wobei die Vorrichtung einen Prozessor umfasst, der ausgebildet ist:

- von dem Radardetektor (9) ein Ankunftsdatum ($t_n$) jedes Impulses der Impulsfolge und eine Wiederholungsperiode (T) der Impulse der Impulsfolge zu empfangen,
- für jeden Impuls der Impulsfolge den Rest ($y_n$) der euklidischen Teilung des Ankunftsdatums ($t_n$) des Impulses durch die Wiederholungsperiode (T) der Impulse zu bestimmen und
- ein mittleres Ankunftsdatum der Impulsfolge aus einem Mittelwert der für jeden Impuls bestimmten Reste ($y_n$) zu schätzen.

**Claims**

1. Method for estimating an average time of arrival at a radar detector (9) of a train of pulses emitted by an emitter (8), the radar detector (9) providing a time of arrival ($t_n$) for each pulse of the train of pulses and a repetition period ($T$) of the pulses of the train of pulses, the method comprising the steps of:

- determining, for each pulse of the train of pulses, the remainder ($y_n$) of the Euclidian division of the time of arrival ($t_n$) of the pulse by the repetition period of the pulses ($T$), and
- estimating an average time of arrival of the train of pulses from an average of the remainders ($y_n$) determined for each pulse.

2. Method according to claim 1, wherein the estimating step comprises associating a number ($x_n$) with each pulse of the train of pulses, the number ($x_n$) of each pulse being obtained by dividing the time of arrival ($t_n$) of the pulse by the repetition period of the pulses ($T$), the estimating step further comprising determining a regression line ($y(x)$) from pairs (($x_n$, $y_n$)) formed by the numbers ($x_n$) of the pulses and the remainders ($y_n$) determined for the pulses, the estimated average time of arrival being a function of the ordinate at the origin of the regression line ($y(x)$).

3. Method according to claim 2, wherein, for each pulse of the train of pulses, the number ($x_n$) and the remainder ($y_n$) are calculated from the time of arrival of the pulse ($t_n$) minus an offset ($\Delta$), the offset ($\Delta$) being chosen so that the difference between the time of arrival of the first pulse of the train and the offset is broadly between zero and the repetition period of the pulses ($T$).

4. Method according to claims 2 or 3, wherein the regression line is obtained by the ordinary least squares method.

5. Method according to any one of claims 2 to 4, wherein the repetition period of the pulses is assigned an estimation error, said estimation error being equal to the opposite of the slope of the regression line.

6. Method according to any one of claims 2 to 5, wherein the times of arrival ($t_n$) of the pulses are assigned a measurement error ($\sigma_t$), the estimating step comprising the calculation, for each pulse of the train, of a residue which is equal to the absolute value of the difference between the remainder ($y_n$) and the value ($y(x_n)$) given by the regression line for the number ($x_n$) corresponding to the remainder ($y_n$) in question, divided by the standard deviation of the measurement error ($\sigma_t$) at the times of arrival ($t_n$), the estimating step further comprising the elimination of the pulses whose residue is greater than or equal to a predetermined threshold ($A$) and the repetition of the sub-step of determining a regression line from the remaining pulses.

7. Method according to claim 6, wherein the predetermined threshold ($A$) is equal to three.

8. Method according to claim 6 or 7, wherein the method comprises the repetition of the sub-steps of determining the regression line, of calculating a residue and of eliminating pulses until the calculated residues are strictly less than the predetermined threshold ($A$).

9. Method according to any one of claims 6 to 8, wherein, when residues are greater than or equal to the predetermined threshold ($A$) and correspond to at least three numbers of consecutive pulses ($x_n$), the repetition period of the pulses ($T$) is considered to have changes of values.

10. Device (10) for estimating an average time of arrival at a radar detector (9) of a train of pulses emitted by an emitter (8), the device comprising a processor configured to:

   - receive a time of arrival ($t_n$) of each pulse of the train of pulses and a repetition period of the pulses ($T$) of said train of pulses, coming from the radar detector (9),
   - determine, for each pulse of the train of pulses, the remainder ($y_n$) of the Euclidian division of the time of arrival ($t_n$) of the pulse by the repetition period of the pulses ($T$), and
   - estimating an average time of arrival of the train of pulses from an average of the remainders ($y_n$) determined for each pulse.

-8-

-9-

-10-

FIG.1

-100-

-110-

-120-

-130-

-140-

FIG.2

FIG.3

FIG.4

FIG.5

**RÉFÉRENCES CITÉES DANS LA DESCRIPTION**

**Documents brevets cités dans la description**

- US 5583505 A
- US 2005033789 A
- EP 2309289 A